# EUROPEAN PATENT SPECIFICATION

(11) **EP 4 476 700 B1**
(45) Date of publication and mention of the grant of the patent: **28.10.2026**
(21) Application number: 23753332.8
(22) Date of filing: 01.02.2023
(51) Int. Cl.: G06V 40/13, H10H 29/14, H10H 29/10, H04W 12/06, H04B 10/116, G07C 9/00

(54) **AUTHENTICATION AND SECURE COMMUNICATION USING LED ARRAY**
AUTHENTIFIZIERUNG UND SICHERE KOMMUNIKATION MIT LED-ARRAY
AUTHENTIFICATION ET COMMUNICATION SÉCURISÉE À L'AIDE DE RÉSEAU DE DEL

(30) Priority: 11.02.2022 US 202263309219 P
(43) Date of publication of application: 18.12.2024
(73) Proprietor: Lumileds LLC, San Jose, CA 95131 (US)
(72) Inventor: VAN DER SIJDE, Arjen Gerben, 5652 AB Eindhoven (NL); PFEFFER, Nicola Bettina, 5652 AB Eindhoven (NL); VAN VOORST VADER, Pieter Johannes Quintus, 5652 AB Eindhoven (NL)
(74) Representative: Beckord & Niedlich Patentanwälte PartG mbB
(86) International application number: PCT/US2023/012114
(87) International publication number: WO 2023/154202

(56) References cited:
- CN-A- 103 295 284
- CN-A- 105 308 626
- JP-A- 2010 165 313
- KR-A- 20070 111 897
- KR-A- 20070 111 897
- KR-A- 20180 052 877
- US-A1- 2005 134 723
- US-A1- 2006 214 815
- US-A1- 2018 096 593
- US-A1- 2019 326 988

## Description

### CLAIM OF PRIORITY

This application claims the benefit of U.S. Provisional Application No. 63/309,219, filed February 11, 2022.

### FIELD OF THE DISCLOSURE

The present disclosure relates to an authentication and security system, such as for unlocking a device, such as a door, a vehicle, or a screen of a computing device.

### BACKGROUND OF THE DISCLOSURE

An authentication system can verify the identity of a user. There is ongoing effort to improve the security of authentication systems. US20180096593A1 relates to electronic access-control systems using optical communication. It addresses authentication of a user device by transmitting authentication information as temporally modulated optical light to a photodetector of the lock, convert it into an electrical signal, and validate the received data before granting access.

### SUMMARY

The present invention is defined in the independent claims, and the preferable features according to the present invention are defined in the dependent claims. In an example, an authentication system can include a housing configured to receive an optical data signal from a user device. The optical data signal can include a plurality of beams propagating at different propagation angles from one another. At least one of the plurality of beams can include temporal modulation that corresponds to data. The authentication system can include a multi-pixel sensor disposed in the housing. The authentication system can include a lens disposed on or in the housing. The lens can at least partially focus the optical data signal onto the multi-pixel sensor such that the plurality of beams are at least partially focused onto different locations on the multi-pixel sensor. The multi-pixel sensor can produce an electrical data signal in response to the optical data signal. The authentication system can include a controller. The controller can obtain the data from the electrical data signal. The controller can compare the data to reference data. The controller can determine that the data matches the reference data. The controller can, in response to determining that the data matches the reference data, produce an authentication signal that indicates that the data matches the reference data.

In an example, a method for performing authentication can include receiving an optical data signal from a user device. The optical data signal can include a plurality of beams propagating at different propagation angles from one another. At least one of the plurality of beams can include temporal modulation that corresponds to data. The method can include at least partially focusing the optical data signal onto a multi-pixel sensor such that the plurality of beams are at least partially focused onto different locations on the multi-pixel sensor. The method can include producing, with the multi-pixel sensor, an electrical data signal in response to the optical data signal. The method can include obtaining the data from the electrical data signal. The method can include comparing the data to reference data. The method can include determining that the data matches the reference data. The method can include, in response to determining that the data matches the reference data, producing an authentication signal that indicates that the data matches the reference data.

In an example, an authentication system can include a housing configured to receive an optical data signal from a camera flash of a smart phone. The optical data signal can include a plurality of beams propagating at different propagation angles from one another. At least one of the plurality of beams can include temporal modulation that corresponds to data. The authentication system can include a multi-pixel sensor disposed in the housing. The authentication system can include a lens disposed on or in the housing. The lens can at least partially focus the optical data signal onto the multi-pixel sensor such that the plurality of beams are at least partially focused onto different locations on the multi-pixel sensor. The multi-pixel sensor can produce an electrical data signal in response to the optical data signal. The authentication system can include a contact sensor disposed on or in the housing and configured to, when physically contacted by the smart phone, produce a contact signal. The authentication system can include a controller configured to, in response to receiving the contact signal: obtain the data from the electrical data signal; compare the data to reference data; determine that the data matches the reference data; and in response to determining that the data matches the reference data, produce an authentication signal that indicates that the data matches the reference data.

### BRIEF DESCRIPTION OF THE DRAWINGS

**FIG. 1** shows a side view of an example of an authentication system, in accordance with some examples.
**FIG. 2** shows a flowchart of an example of a method for performing authentication, in accordance with some examples.

Corresponding reference characters indicate corresponding parts throughout the several views. Elements in the drawings are not necessarily drawn to scale. The configurations shown in the drawings are merely examples and should not be construed as limiting in any manner.

### DETAILED DESCRIPTION

An authentication system can verify the identity of a user.

For example, a server can send data to a smart phone of a user. The smart phone can represent the data as a quick response (QR) code and can display the QR code on the display of the smart phone. A reader can scan the QR code. The reader can compare the QR code (or data represented by the QR code) to a specified QR code (or specified data) received from the server. If reader can confirm that the QR code (or data) the data matches the specified QR code (or the specified data), the reader can take a suitable action, such as providing a signal that instructs a lock to unlock a door or providing a visual indication and/or an audio indication that confirms an identity of the user.

There are potential drawbacks to display-based authentication, such as displaying and reading a QR code. For example, because the QR code is displayed on a device, a nefarious entity possessing a strategically located camera could potentially capture an image of the QR code, thereby intercepting the QR code and its associated data, and potentially compromising the security of the authentication system. There are similar risks of interception for wireless communication, such as near-field communication, like Bluetooth, and Wi-Fi.

As an alternative to display-based authentication, the authentication system and method described in detail below can use an optical data signal that may not be displayed as an image on a user device. Instead, the optical data signal can originate from a segmented light source, such as a light-emitting diode (LED) array. A lens can at least partially focus the light from the segmented light source, and can direct light from the LED array to propagate as a plurality of light beams that have different propagation angles from one another. The optical data signal can include a pattern formed by the LED array. The pattern can include data, such as an identification number, an account number, or a one-time security token. The pattern can optionally evolve in time. The time-evolving pattern can optionally include data encoded in the time-evolution. Because the authentication system and method described in detail below does not include using the display of a device to display data or a code, the authentication system and method described in detail below can have improved security over a display-based authentication system. Further, because the authentication system and method are not limited by a refresh rate of the display, the data rate achieved by the authentication system and method can be significantly greater than for a comparable display-based system.

In some examples, a camera flash on a smart phone can be used as the light source for the authentication system discussed in detail below.

The camera flash can vary a light intensity over an illumination field. For example, the camera flash can direct more light to objects in a scene that are relatively far from the camera, and less light to objects in the scene that are relatively close to the camera, so that both the far objects and the near objects can have suitable lighting for a captured image of the scene. As another example, vehicle headlights can dim a portion of the angular illumination field to avoid blinding drivers of oncoming vehicles. Other suitable examples and applications can also be used.

In some examples of illumination systems that can vary a light intensity over an illumination field, a lens can collimate (or at least partially focus) light from a light-emitting diode (LED) array, such as a segmented LED that has individually addressable segments that can be electrically powered independent of other segments. For the purposes of this document, the terms "LED array" and "segmented LED" are interchangeable, and the terms "LEDs" and "LED segments" are interchangeable.

The lens can direct light toward the scene, such that a particular location on the LED array can be directed in a particular angular orientation toward the scene. By varying electrical power sent to the LEDs of the LED array, the illumination system can dynamically adjust the illuminance over the illumination field. For illumination of a particular scene, the light propagating in a particular direction can correspond to a particular location in the scene. In other words, to dynamically adjust illumination intensities for locations within the scene, the illumination system can dynamically adjust electrical power sent to the various LEDs in the LED array.

The camera flash, which can vary the illuminance over an illumination field, can be used as a light source for the authentication system discussed in detail below.

In an example of an authentication system, a housing can receive an optical data signal, such as a camera flash, from a user device, such as a smart phone. The optical data signal can include a plurality of beams propagating at different propagation angles from one another. At least one of the beams can include temporal modulation that corresponds to data. A lens disposed on or in the housing can at least partially focus the optical data signal onto a multi-pixel sensor such that the beams are at least partially focused onto different locations on the sensor. The sensor can produce an electrical data signal in response to the optical data signal. A controller can obtain the data from the electrical data signal, compare the data to reference data, determine that the data matches the reference data, and produce an authentication signal that indicates that the data matches the reference data.

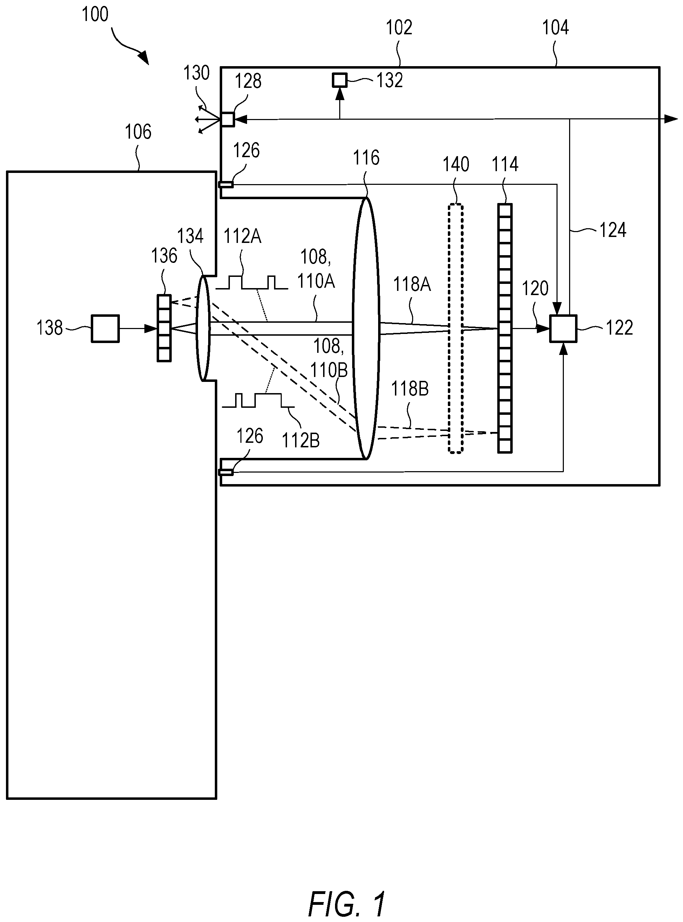

**FIG. 1** shows a side view of an example of an authentication system **100,** in accordance with some examples. The authentication system **100** can include a reader **102,** which can include a housing **104** and various components in or on the housing **104.** The reader **102** can receive information from a user device **106,** such as a smart phone. During use, a user can hold the user device **106** and direct light from the user device **106** into the housing **104** of the reader **102.** As such, the reader **102** may not include the user device **106.** The authentication system **100** can include the reader **102** and any suitable user devices **106.**

The authentication system **100** can include the housing **104.** The housing **104** can receive an optical data signal **108** from a user device **106.** The optical data signal **108** can include a plurality of beams **110A, 110B** propagating at different propagation angles from one another.

At least one of the plurality of beams **110A, 110B** can include temporal modulation **112A, 112B** that corresponds to data, such as a security token. For example, beam **110A** can include temporal modulation **112A** that can encode data onto the beam **110A.** Similarly, beam **110B** can including temporal modulation **112B** that can encode data onto the beam **110B.** The data can be included in one beam, such as **110A** or **110B,** or can be distributed over multiple beams, such as both **110A** and **110B.**

In some examples, the temporal modulation **112A** and/or **112B** can include switching on or off a beam at a relatively slow data rate, such as 1 Hz (e.g., viewable with the naked eye). Such relatively slow temporal modulation can allow the beams to form a first pattern (e.g., a first subset of the beams being powered on), then a second pattern (e.g., a second subset of the beams being powered on, the second subset differing from the first subset), and so forth. The optical data signal **108** can be encoded in the sequence of patterns.

In some examples, the temporal modulation **112A** and/or **112B** can include switching on or off a beam at a relatively high data rate, such as 1 kHz (e.g., not viewable with the naked eye). For relatively high data rates, the temporal modulation **112A, 112B** can include pulse-width modulation, or another suitable encoding/decoding scheme. In some examples, the temporal modulation **112A, 112B** can be selected such that a time-averaged intensity level for each beam **110A, 110B** has a specified value. In addition, the time-averaged intensity level can optionally be used to check an integrity of the data, such as with a check sum or other suitable redundant-data techniques. In some examples, the data rate can be higher than can be resolved by typical cameras. For example, a data rate of about 1 MHz can be resolved by a suitable sensor, but may not be resolved by a typical camera (e.g., with a refresh rate of 120 Hz or other suitable value) and may not be resolved by the human eye.

A multi-pixel sensor **114** can be disposed in the housing **104.** In some examples, the multi-pixel sensor **114** can be sensitive to visible light (e.g., light in the visible portion of the electromagnetic spectrum, such as having a wavelength or wavelengths between about 400 nm and about 700 nm). The multi-pixel sensor **114** can produce a detectable signal when exposed to visible light.

In some examples, a number of pixels in the multi-pixel sensor **114** can be greater than a number of beams in the plurality of beams **110A, 110B.** Using a multi-pixel sensor **114** with more pixels than beams can loosen tolerances on where a user can place the user device **106.** For example, using significantly more pixels than beams, such as by a factor of about 10, about 100, or greater, can allow the user to position the user device **106** with any suitable azimuthal position (e.g., for a smart phone, the azimuthal position being a rotation in a plane of the smart phone).

A lens **116** can be disposed on or in the housing **104.** The lens **116** can at least partially focus the optical data signal **108** onto the multi-pixel sensor **114** such that the plurality of beams **110A, 110B** are at least partially focused (as respective converging beams **118A, 118B)** onto different locations on the multi-pixel sensor **114.** The multi-pixel sensor **114** can produce an electrical data signal **120** in response to the optical data signal **108.**

A controller **122** obtain the data from the electrical data signal **120.** The controller **122** can compare the data to reference data. For example, a server can supply the data for the electrical data signal, such as by sending a security token or other suitable data to the user device **106.** The same server can send the reference data to the controller **122.** The controller **122** can determine whether or not the data matches the reference data.

In response to determining that the data matches the reference data, the controller **122** can produce an authentication signal **124** that indicates that the data matches the reference data. In some examples, the authentication system **100** can supply the authentication signal **124** to a locking mechanism of a device to unlock the device. For example, the housing **104** can be positioned next to a door. When the controller **122** has determined that the data matches the reference data, the controller **122** can send the authentication signal **124** to a locking mechanism to unlock the door. Other suitable uses can include unlocking a computer, verifying an identity of a passenger, and others. Additional uses can be directed toward transferring data securely, such as from smart phone to smart phone, smart phone to laptop computer, laptop computer to smart phone, and others.

In some examples, a contact sensor **126** can be disposed on or in the housing **104.** When physically contacted, the contact sensor **126** can direct the controller **122** to initiate obtaining the data from the electrical data signal **120.** In some examples, the contact sensor **126** can sense physical contact from the user device **106,** such as by a user holding a smart phone against one or more buttons that form the contact sensor **126.** Using a contact sensor **126** in this manner can help ensure that the plurality of beams **110A, 110B** can propagate only within a closed environment, such as the bounded volume between the user device **106** and the housing **104.** Because the plurality of beams **110A, 110B** can propagate only within a closed environment, and may not be displayed in an open-air environment, the optical data signal **108** may be more secure than a QR code (or other data) displayed on a display of a user device. In some examples, the authentication system **100** can be used a second factor in a two-factor authentication system.

In some examples, a visual indicator **128** can disposed on or in the housing **104.** The visual indicator **128** can receive the authentication signal **124** and provide a visual indication **130** in response to receiving the authentication signal **124.** In some examples, the visual indicator **128** can include a green light. When the controller **122** has determined that the data matches the reference data, the green light can turn on or flash. In some examples, the visual indicator **128** includes a red light. When the controller **122** has determined that the data does not match the reference data, the red light can turn on or flash. Other suitable visual indicators can also be used.

In some examples, an audio transducer **132** can be disposed on or in the housing **104.** The audio transducer **132** can receive the authentication signal **124** and produce a sound in response to receiving the authentication signal **124.** Other suitable indicators can also be used to alert a user that the data matches (or does not match) the reference data. In some examples, the audio transducer **132** can produce a first sound, such as a ping or a ring, when the data matches the reference data and a second sound, such as a buzzer, when the data does not match the reference data.

Thus far, the authentication system **100** has been described as having a user device **106** that can direct data, on an optical data signal **108,** to a housing **104** of a reader **102.** In some examples, the authentication system **100** can additionally direct data in the opposite direction, from the housing **104** to the user device **106.** For some of these examples, at least one pixel of the multi-pixel sensor **114** can be forward biased to emit light as a forward-biased light-emitting diode. The controller **122** can further modulate the at least one pixel to produce second light that includes second data. The lens **116** can further direct the second light to the user device **106.** In this manner, the second light can traverse essentially the same path as the optical data signal **108,** with no additional components needed to produce, direct, or receive the second light. This traversal of the second light can be referred to as bidirectionality. Bidirectionality can be used for feedback to the user device **106,** such as providing feedback for aligning the user device **106** to the housing **104,** providing feedback to the user device **106** indicating that data has been properly received, and so forth. In some examples, the user device **106** can use a display of the user device **106** to provide an alert to the user. The alert can indicate that proper alignment has been achieved, that data has been properly received, and so forth.

In some examples, the user device **106** can be a smart phone. The smart phone can produce the optical data signal **108** from a camera flash on the smart phone. In some examples, the camera flash can include a collimating lens **134** having a focal plane. The camera flash can include a light-emitting diode array **136** disposed at or near the focal plane. The light-emitting diode array **136** can emit light through the collimating lens **134.** The light from each light-emitting diode can form a respective beam of the plurality of beams **110A, 110B** of the optical data signal **108.** A user device controller **138** can receive the data from the server, and can encode the data onto the optical data signal **108** by selectively powering light-emitting diodes of the light-emitting diode array **136.** Alternatively, the user device **106** can include a single light-emitting diode that is encoded with the data via temporal modulation.

In some examples, each light-emitting diode can emit excitation light at an excitation wavelength, such as in a blue or violet portion of the electromagnetic spectrum. Each light-emitting diode can include a phosphor that can absorb at least some of the excitation light and emit phosphor light having a phosphor wavelength greater than the excitation wavelength. In some examples, the user device controller **138** can modulate at least one of the light-emitting diodes at a data rate that is faster than a decay rate of the phosphor. In some examples, the authentication system **100** can further include an optional wavelength-sensitive filter **140** in an optical path between the lens **116** and the multi-pixel sensor **114.** The wavelength-sensitive filter **140** can pass at least some of the excitation light to the multi-pixel sensor **114** and prevent at least some of the phosphor light from reaching the multi-pixel sensor **114.** In some examples, the wavelength-sensitive filter **140** can absorb the phosphor light. In other examples, the wavelength-sensitive filter **140** can be a dichroic beamsplitter. In one geometry, the dichroic beamsplitter can reflect the phosphor light away from the multi-pixel sensor **114.** In another geometry, the dichroic beamsplitter can direct the excitation light toward the multi-pixel sensor **114.** Other suitable configurations can also be used.

In a specific example of an authentication system **100,** a housing 104 can receive an optical data signal **108** from a camera flash of a smart phone. The optical data signal **108** including a plurality of beams **110A, 110B** propagating at different propagation angles from one another. At least one of the plurality of beams **110A, 110B** can include temporal modulation that corresponds to data. A multi-pixel sensor **114** can be disposed in the housing **104.** A lens **116** can be disposed on or in the housing **104.** The lens **116** can at least partially focus the optical data signal **108** onto the multi-pixel sensor **114** such that the plurality of beams **110A, 110B** are at least partially focused onto different locations on the multi-pixel sensor **114.** The multi-pixel sensor **114** can produce an electrical data signal **120** in response to the optical data signal **108.** A contact sensor **126** can be disposed on or in the housing **104.** When physically contacted by the smart phone, the contact sensor **126** can produce a contact signal. A controller **122** can, in response to receiving the contact signal, obtain the data from the electrical data signal **120,** compare the data to reference data, determine that the data matches the reference data, and in response to determining that the data matches the reference data (or that the data is valid), produce an authentication signal **124** that indicates that the data matches the reference data.

In some examples, the camera flash can include a collimating lens **134** having a focal plane. The camera flash can include a light-emitting diode array **136** disposed at or near the focal plane. The light-emitting diode array **136** can emit light through the collimating lens **134.** The light from each light-emitting diode can form a respective beam **110A, 110B** of the plurality of beams **110A, 110B** of the optical data signal **108.**

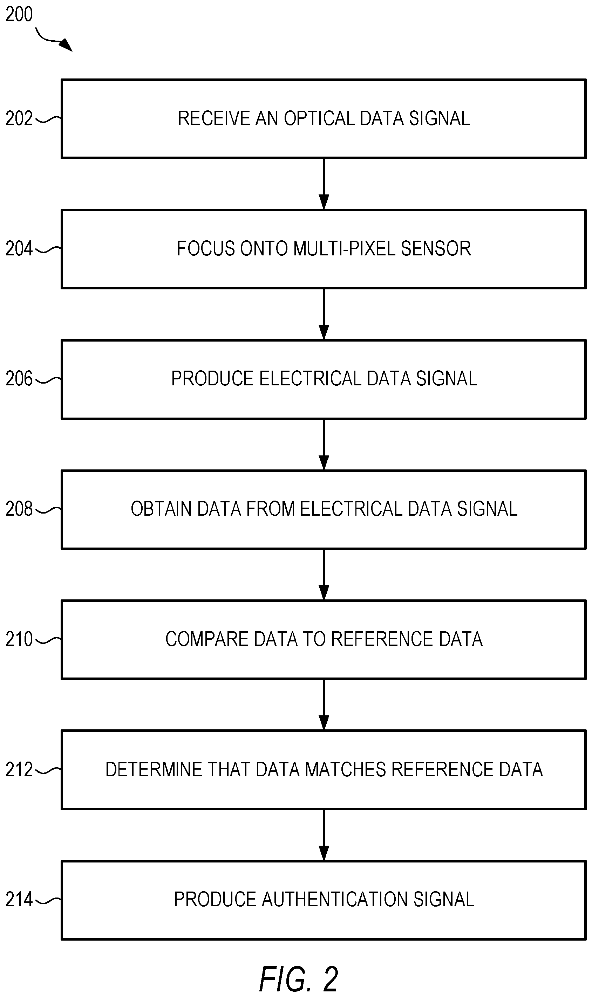

**FIG. 2** shows a flowchart of an example of a method **200** for performing authentication, in accordance with some examples. The method **200** can be executed by authentication system **100** or another authentication system. The method **200** for performing authentication is but one method for performing authentication; other suitable methods can also be used.

At operation **202,** the system, such as authentication system **100,** can receive an optical data signal, such as optical data signal **108,** from a user device, such as user device **106.** The optical data signal can include a plurality of beams, such as **110A, 110B,** propagating at different propagation angles from one another. At least one of the plurality of beams **110A, 110B** can include temporal modulation that corresponds to data.

At operation **204,** the system can at least partially focus the optical data signal onto a multi-pixel sensor, such as multi-pixel sensor **114,** such that the plurality of beams are at least partially focused onto different locations on the multi-pixel sensor.

At operation **206,** the system can produce, with the multi-pixel sensor, an electrical data signal, such as electrical data signal **120,** in response to the optical data signal.

At operation **208,** the system can obtain the data from the electrical data signal.

At operation **210,** the system can compare the data to reference data.

At operation **212,** the system can determine that the data matches the reference data.

At operation **214,** the system can, in response to determining that the data matches the reference data, produce an authentication signal, such as authentication signal **124,** that indicates that the data matches the reference data.

In some examples, the method **200** can optionally further include sensing physical contact from a contact sensor, and, in response to sensing physical contact from the contact sensor, initiating obtaining the data from the electrical data signal.

In some examples, the method **200** can optionally further include, in response to determining that the data matches the reference data, providing a visual indication indicating that the data matches the reference data.

While only certain features of the system and method have been illustrated and described herein, many modifications and changes will occur to those skilled in the art. It is, therefore, to be understood that the appended claims are intended to cover all such modifications and changes. Method operations can be performed substantially simultaneously or in a different order.

## Claims

1. An authentication system (100), comprising:
a reader (102) adapted to receive information from a user device (106), wherein the reader comprises
- a housing (104) configured to receive an optical data signal (108) originating from a segmented light source (136) of the user device, the optical data signal (108) including a plurality of beams propagating at different propagation angles from one another, at least one of the plurality of beams including temporal modulation (112A, 112B) that corresponds to data;
- a multi-pixel sensor (114) disposed in the housing;
- a lens (116) disposed on or in the housing, the lens configured to at least partially focus the optical data signal (108) onto the multi-pixel sensor such that the plurality of beams are at least partially focused onto different locations on the multi-pixel sensor, the multi-pixel sensor configured to produce an electrical data signal (120) in response to the optical data signal (108);
- a controller (122) configured to:
obtain the data from the electrical data signal (120);
compare the data to reference data;
determine that the data matches the reference data; and,
in response to determining that the data matches the reference data, produce an authentication signal (124) that indicates that the data matches the reference data; and
- a contact sensor (126) disposed on or in the housing (104) and configured to, when physically contacted by the user device (106), direct the controller (122) to initiate obtaining the data from the electrical data signal (120).

2. The authentication system of claim 1, wherein the housing (104) is positioned next to a door, and wherein the controller (122) is configured to send the authentication signal (124) to a locking mechanism to unlock the door.

3. The authentication system according to claim 1 or claim 2, wherein the contact sensor (126) is configured to sense physical contact from the user device (106).

4. The authentication system of claim 1, further comprising a visual indicator (128) disposed on or in the housing, the visual indicator configured to receive the authentication signal (124) and provide a visual indication in response to receiving the authentication signal (124).

5. The authentication system of claim 1, wherein the authentication system is configured to supply the authentication signal (124) to a locking mechanism of a device to unlock the device.

6. The authentication system of claim 1, wherein the data comprises a security token.

7. The authentication system of claim 1, wherein:
the controller (122) is configured to receive the reference data from a server; and
the server is configured to supply the data for the electrical data signal (120).

8. The authentication system of claim 1, wherein:
at least one pixel of the multi-pixel sensor is forward biased to emit light as a forward-biased light-emitting diode;
the controller (122) is further configured to modulate the at least one pixel to produce second light that includes second data; and
the lens is further configured to direct the second light to the user device (106).

9. The authentication system of claim 1, wherein a number of pixels in the multi-pixel sensor is greater than a number of beams in the plurality of beams.

10. The authentication system of claim 1, wherein the user device is a smart phone configured to produce the optical data signal (108) from a camera flash on the smart phone.

11. The authentication system according to the preceding claim, wherein the camera flash includes:
a collimating lens (134) having a focal plane; and wherein
the segmented light source (136) is a light-emitting diode array (136) disposed at or near the focal plane and configured to emit light through the collimating lens, the light from each light-emitting diode forming a respective beam of the plurality of beams of the optical data signal (108).

12. The authentication system according to the preceding claim, wherein:
the light-emitting diode array comprises light-emitting diodes, each light-emitting diode being configured to emit excitation light at an excitation wavelength, each light-emitting diode including a phosphor configured to absorb at least some of the excitation light and emit phosphor light having a phosphor wavelength greater than the excitation wavelength; and
the authentication system further comprises a wavelength-sensitive filter in an optical path between the lens and the multi-pixel sensor, the wavelength-sensitive filter configured to pass at least some of the excitation light to the multi-pixel sensor and prevent at least some of the phosphor light from reaching the multi-pixel sensor.

13. The authentication system according to the preceding claim, wherein the user device (106) includes a user device controller (138) configured to modulate at least one of the light-emitting diodes at a data rate that is faster than a decay rate of the phosphor.

14. A method for performing authentication using the authentication system (100) according to any of claims 1 to 13, the method comprising:
receiving an optical data signal (108) originating from a segmented light source (136) of a user device (106), the optical data signal (108) including a plurality of beams (110A, 110B) propagating at different propagation angles from one another, at least one of the plurality of beams (110A, 110B) including temporal modulation (112A, 112B) that corresponds to data;
at least partially focusing the optical data signal (108) onto the multi-pixel sensor (114) such that the plurality of beams (110A, 110B) are at least partially focused onto different locations on the multi-pixel sensor (114),
producing, with the multi-pixel sensor (114), an electrical data signal (120) in response to the optical data signal (108);
sensing physical contact from a contact sensor (126); and in response to sensing physical contact from the contact sensor (126), initiating obtaining the data from the electrical data signal (120);
obtaining the data from the electrical data signal (120);
comparing the data to reference data;
determining that the data matches the reference data; and
in response to determining that the data matches the reference data, producing an authentication signal (124) that indicates that the data matches the reference data.

## Patentansprüche

1. Ein Authentifizierungssystem (100), umfassend:
ein Lesegerät (102), das dazu ausgelegt ist, Informationen von einer Benutzervorrichtung (106) zu empfangen, wobei das Lesegerät umfasst
- ein Gehäuse (104), das so konfiguriert ist, dass es ein optisches Datensignal (108) empfängt, das von einer segmentierten Lichtquelle (136) der Benutzervorrichtung stammt, wobei das optische Datensignal (108) eine Vielzahl von Strahlen umfasst, die sich in unterschiedlichen Ausbreitungswinkeln zueinander ausbreiten, wobei mindestens einer der Vielzahl von Strahlen eine Daten entsprechende zeitliche Modulation (112A, 112B) aufweist;
- einen im Gehäuse angeordneten Mehrpixel-Sensor (114);
- eine an oder in dem Gehäuse angeordnete Linse (116), die Linse so ausgelegt ist, das optische Datensignal (108) zumindest teilweise auf den Multipixel-Sensor zu fokussieren, sodass die mehreren Strahlen zumindest teilweise auf verschiedene Stellen auf dem Multipixel-Sensor fokussiert werden, wobei der Multipixel-Sensor so ausgelegt ist, in Reaktion auf das optische Datensignal (108) ein elektrisches Datensignal (120) zu erzeugen;
- eine Steuereinheit (122), welche ausgelegt ist, um
die Daten aus dem elektrischen Datensignal (120) zu gewinnen;
die Daten mit Referenzdaten zu vergleichen;
festzustellen, dass die Daten mit den Referenzdaten übereinstimmen; und
als Reaktion auf die Feststellung, dass die Daten mit den Referenzdaten übereinstimmen, ein Authentifizierungssignal (124) zu erzeugen, das anzeigt, dass die Daten mit den Referenzdaten übereinstimmen; und
- einen an oder in dem Gehäuse (104) angeordneten Kontaktsensor (126), der so konfiguriert ist, dass er, wenn er von der Benutzervorrichtung (106) physisch berührt wird, die Steuerung (122) anweist, das Erfassen der Daten aus dem elektrischen Datensignal (120) einzuleiten.

2. Das Authentifizierungssystem nach Anspruch 1, wobei das Gehäuse (104) neben einer Tür positioniert ist und wobei die Steuerung (122) so konfiguriert ist, dass sie das Authentifizierungssignal (124) an einen Verriegelungsmechanismus sendet, um die Tür zu entriegeln.

3. Das Authentifizierungssystem nach Anspruch 1 oder Anspruch 2, wobei der Kontaktsensor (126) so konfiguriert ist, dass er einen physischen Kontakt mit der Benutzervorrichtung (106) erfasst.

4. Das Authentifizierungssystem nach Anspruch 1, das ferner eine an oder in dem Gehäuse (104) angeordnete visuelle Anzeige (128) umfasst, wobei die visuelle Anzeige so konfiguriert ist, dass sie das Authentifizierungssignal (124) empfängt und als Reaktion auf den Empfang des Authentifizierungssignals (124) eine visuelle Anzeige liefert.

5. Das Authentifizierungssystem nach Anspruch 1, wobei das Authentifizierungssystem so konfiguriert ist, dass es das Authentifizierungssignal (124) an einen Verriegelungsmechanismus einer Vorrichtung liefert, um die Vorrichtung zu entriegeln.

6. Das Authentifizierungssystem nach Anspruch 1, wobei die Daten ein Sicherheitstoken umfassen.

7. Das Authentifizierungssystem nach Anspruch 1, wobei:
die Steuereinheit (122) so konfiguriert ist, dass sie die Referenzdaten von einem Server empfängt; und
der Server so konfiguriert ist, dass er die Daten für das elektrische Datensignal (120) bereitstellt.

8. Authentifizierungssystem nach Anspruch 1, wobei:
mindestens ein Pixel des Mehrpixel-Sensors in Vorwärtsrichtung vorgespannt ist, um als eine in Vorwärtsrichtung vorgespannte Leuchtdiode Licht zu emittieren;
die Steuerung (122) ferner so ausgelegt ist, dass sie das mindestens eine Pixel moduliert, um zweites Licht zu erzeugen, das zweite Daten enthält; und
die Linse ist ferner so konfiguriert, dass sie das zweite Licht auf die Benutzervorrichtung (106) lenkt.

9. Das Authentifizierungssystem nach Anspruch 1, wobei die Anzahl der Pixel im Mehrpixel-Sensor größer ist als die Anzahl der Strahlen in der Vielzahl von Strahlen.

10. Das Authentifizierungssystem nach Anspruch 1, wobei die Benutzervorrichtung ein Smartphone ist, das so ausgelegt ist, um das optische Datensignal (108) aus einem Kamerablitz des Smartphones zu erzeugen.

11. Authentifizierungssystem nach dem vorstehenden Anspruch, wobei der Kamerablitz umfasst:
eine Kollimatorlinse (134) mit einer Brennebene; und wobei
die segmentierte Lichtquelle (136) eine Leuchtdioden-Array (136) ist, die in der Brennebene oder in deren Nähe angeordnet und so konfiguriert ist, dass sie Licht durch die Kollimatorlinse emittiert, wobei das Licht von den einzelnen Dioden jeweils einen Strahl der mehreren Strahlen des optischen Datensignals (108) bildet.

12. Das Authentifizierungssystem gemäß dem vorstehenden Anspruch, wobei:
die Leuchtdioden-Array Leuchtdioden umfasst, wobei jede Leuchtdiode so ausgelegt ist, dass sie Anregungslicht mit einer Anregungswellenlänge emittiert, und jede Leuchtdiode einen Leuchtstoff enthält, der so ausgelegt ist, dass er zumindest einen Teil des Anregungslichts absorbiert und Leuchtstofflicht mit einer Leuchtstoffwellenlänge emittiert, die größer ist als die Anregungswellenlänge; und
das Authentifizierungssystem ferner ein wellenlängenempfindliches Filter in einem Strahlengang zwischen der Linse und dem Multipixel-Sensor umfasst, wobei das wellenlängenempfindliche Filter so ausgelegt ist, dass es zumindest einen Teil des Anregungslichts zum Multipixel-Sensor durchlässt und verhindert, dass zumindest ein Teil des Leuchtstofflichts den Multipixel-Sensor erreicht.

13. Das Authentifizierungssystem gemäß dem vorstehenden Anspruch, wobei die Benutzervorrichtung (106) eine Benutzervorrichtungssteuerung (138) umfasst, die so ausgelegt ist, dass sie mindestens eine der Leuchtdioden mit einer Datenrate moduliert, die schneller ist als die Abklingrate des Leuchtstoffs.

14. Verfahren zur Durchführung einer Authentifizierung unter Verwendung des Authentifizierungssystems (100) gemäß einem der Ansprüche 1 bis 13, wobei das Verfahren umfasst:
Empfangen eines optischen Datensignals (108), das von einer segmentierten Lichtquelle (136) einer Benutzervorrichtung (106) stammt, wobei das optische Datensignal (108) eine Vielzahl von Strahlen (110A, 110B) umfasst, die sich in voneinander unterschiedlichen Ausbreitungswinkeln ausbreiten, wobei mindestens einer der Vielzahl von Strahlen (110A, 110B) eine Daten entsprechende zeitliche Modulation (112A, 112B) enthält;
das optische Datensignal (108) zumindest teilweise auf den Mehrpixel-Sensor (114) fokussieren, sodass die mehreren Strahlen (110A, 110B) zumindest teilweise auf verschiedene Stellen auf dem Mehrpixel-Sensor (114) fokussiert werden,
Erzeugen eines elektrischen Datensignals (120) mit dem Mehrpixel-Sensor (114) als Reaktion auf das optische Datensignal (108);
Erfassen eines physikalischen Kontakts durch einen Kontaktsensor (126); und in Reaktion auf das Erfassen eines physikalischen Kontakts durch den Kontaktsensor (126) Einleiten des Erfassens der Daten aus dem elektrischen Datensignal (120);
Erfassen der Daten aus dem elektrischen Datensignal (120);
Vergleichen der Daten mit Referenzdaten;
Feststellen, dass die Daten mit den Referenzdaten übereinstimmen; und
als Reaktion auf die Feststellung, dass die Daten mit den Referenzdaten übereinstimmen, Erzeugen eines Authentifizierungssignals (124), das anzeigt, dass die Daten mit den Referenzdaten übereinstimmen.

## Revendications

1. Système d'authentification (100), comprenant :
un lecteur (102) adapté pour recevoir des informations provenant d'un dispositif utilisateur (106), dans lequel le lecteur comprend
- un boîtier (104) configuré pour recevoir un signal de données optique (108) provenant d'une source lumineuse segmentée (136) du dispositif utilisateur, le signal de données optique (108) comprenant une pluralité de faisceaux se propageant selon des angles de propagation différents les uns des autres, au moins l'un des faisceaux de la pluralité comportant une modulation temporelle (112A, 112B) qui correspond à des données ;
- un capteur multipixel (114) disposé dans le boîtier ;
- une lentille (116) disposée sur ou dans le boîtier, la lentille étant configurée pour focaliser au moins partiellement le signal de données optique (108) sur le capteur multipixel de telle sorte que la pluralité de faisceaux soit au moins partiellement focalisée sur différents emplacements du capteur multipixel, le capteur multipixel étant configuré pour produire un signal de données électrique (120) en réponse au signal de données optique (108) ;
- un contrôleur (122) configuré pour :
extraire les données du signal de données électrique (120) ;
comparer les données à des données de référence ;
déterminer que les données correspondent aux données de référence ; et,
en réponse à la détermination selon laquelle les données correspondent aux données de référence, générer un signal d'authentification (124) indiquant que les données correspondent aux données de référence ; et
- un capteur de contact (126) disposé sur ou dans le boîtier (104) et configuré pour, lorsqu'il est physiquement en contact avec le dispositif utilisateur (106), ordonner au contrôleur (122) de lancer l'extraction des données à partir du signal de données électrique (120).

2. Système d'authentification selon la revendication 1, dans lequel le boîtier (104) est positionné à proximité d'une porte, et dans lequel le contrôleur (122) est configuré pour envoyer le signal d'authentification (124) à un mécanisme de verrouillage afin de déverrouiller la porte.

3. Système d'authentification selon la revendication 1 ou la revendication 2, dans lequel le capteur de contact (126) est configuré pour détecter un contact physique provenant du dispositif utilisateur (106).

4. Système d'authentification selon la revendication 1, comprenant en outre un indicateur visuel (128) disposé sur ou dans le boîtier, l'indicateur visuel étant configuré pour recevoir le signal d'authentification (124) et fournir une indication visuelle en réponse à la réception du signal d'authentification (124).

5. Système d'authentification selon la revendication 1, dans lequel le système d'authentification est configuré pour fournir le signal d'authentification (124) à un mécanisme de verrouillage d'un dispositif afin de déverrouiller ce dernier.

6. Système d'authentification selon la revendication 1, dans lequel les données comprennent un jeton de sécurité.

7. Système d'authentification selon la revendication 1, dans lequel :
le contrôleur (122) est configuré pour recevoir les données de référence provenant d'un serveur ; et
le serveur est configuré pour fournir les données destinées au signal de données électrique (120).

8. Système d'authentification selon la revendication 1, dans lequel :
au moins un pixel du capteur multipixel est polarisé en sens direct pour émettre de la lumière à la manière d'une diode électroluminescente polarisée en sens direct ;
le contrôleur (122) est en outre configuré pour moduler ledit au moins un pixel afin de produire une seconde lumière qui comprend des secondes données ; et
la lentille est en outre configurée pour diriger cette seconde lumière vers le dispositif utilisateur (106).

9. Système d'authentification selon la revendication 1, dans lequel le nombre de pixels du capteur multipixel est supérieur au nombre de faisceaux de la pluralité de faisceaux.

10. Système d'authentification selon la revendication 1, dans lequel le dispositif utilisateur est un smartphone configuré pour produire le signal de données optiques (108) à partir du flash de l'appareil photo du smartphone.

11. Système d'authentification selon la revendication précédente, dans lequel le flash de l'appareil photo comprend :
une lentille de collimation (134) présentant un plan focal ; et dans lequel
la source lumineuse segmentée (136) est un réseau de diodes électroluminescentes (136) disposé au niveau ou à proximité du plan focal et configuré pour émettre de la lumière à travers la lentille de collimation, la lumière provenant de chaque diode électroluminescente formant un faisceau respectif parmi la pluralité de faisceaux du signal de données optique (108).

12. Système d'authentification selon la revendication précédente, dans lequel :
le réseau de diodes électroluminescentes comprend des diodes électroluminescentes, chaque diode électroluminescente étant configurée pour émettre une lumière d'excitation à une longueur d'onde d'excitation, chaque diode électroluminescente comprenant un phosphore configuré pour absorber au moins une partie de la lumière d'excitation et émettre une lumière de phosphore ayant une longueur d'onde de phosphore supérieure à la longueur d'onde d'excitation ; et
le système d'authentification comprend en outre un filtre sensible à la longueur d'onde situé dans un chemin optique entre la lentille et le capteur multipixel, le filtre sensible à la longueur d'onde étant configuré pour laisser passer au moins une partie de la lumière d'excitation vers le capteur multipixel et empêcher au moins une partie de la lumière de phosphore d'atteindre le capteur multipixel.

13. Système d'authentification selon la revendication précédente, dans lequel le dispositif utilisateur (106) comprend un contrôleur de dispositif utilisateur (138) configuré pour moduler au moins l'une des diodes électroluminescentes à un débit de données supérieur à la vitesse de décroissance du phosphore.

14. Procédé permettant d'effectuer une authentification à l'aide du système d'authentification (100) selon l'une quelconque des revendications 1 à 13, le procédé comprenant :
la réception d'un signal de données optique (108) provenant d'une source lumineuse segmentée (136) d'un dispositif utilisateur (106), le signal de données optique (108) comprenant une pluralité de faisceaux (110A, 110B) se propageant selon des angles de propagation différents les uns des autres, au moins l'un des faisceaux de la pluralité (110A, 110B) comportant une modulation temporelle (112A, 112B) qui correspond à des données ;
focaliser au moins partiellement le signal de données optique (108) sur le capteur multipixel (114) de telle sorte que la pluralité de faisceaux (110A, 110B) soit au moins partiellement focalisée sur différents emplacements du capteur multipixel (114),
produire, à l'aide du capteur multipixel (114), un signal de données électrique (120) en réponse au signal de données optique (108) ;
détecter un contact physique à l'aide d'un capteur de contact (126) ; et en réponse à la détection d'un contact physique par le capteur de contact (126), lancer l'extraction des données à partir du signal de données électrique (120) ;
extraire les données du signal de données électrique (120) ;
comparer les données à des données de référence ;
déterminer que les données correspondent aux données de référence ; et
en réponse à la détermination selon laquelle les données correspondent aux données de référence, générer un signal d'authentification (124) indiquant que les données correspondent aux données de référence.
